(19) Europäisches Patentamt
European Patent Office
Office européen des brevets

(11) **EP 0 981 802 B1**

(12) **EUROPÄISCHE PATENTSCHRIFT**

(45) Veröffentlichungstag und Bekanntmachung des Hinweises auf die Patenterteilung:
**08.08.2001   Patentblatt 2001/32**

(21) Anmeldenummer: **98922795.4**

(22) Anmeldetag: **04.05.1998**

(51) Int Cl.⁷: $G06K\ 9/46$, A61B 5/117

(86) Internationale Anmeldenummer:
**PCT/EP98/02612**

(87) Internationale Veröffentlichungsnummer:
**WO 98/52149 (19.11.1998 Gazette 1998/46)**

(54) **VERFAHREN ZUR IDENTIFIZIERUNG VON FINGERABDRÜCKEN**

METHOD FOR IDENTIFYING FINGERPRINTS

PROCEDE POUR L'IDENTIFICATION D'EMPREINTES DIGITALES

(84) Benannte Vertragsstaaten:
**AT BE CH DE DK ES FR GB GR IE IT LI NL PT SE**

(30) Priorität: **13.05.1997  AT 81297**

(43) Veröffentlichungstag der Anmeldung:
**01.03.2000   Patentblatt 2000/09**

(73) Patentinhaber: **Siemens Aktiengesellschaft Österreich**
**1210 Wien (AT)**

(72) Erfinder:
- **HASELSTEINER, Ernst**
  **A-8010 Graz (AT)**
- **HESCHGL, Kurt**
  **A-8043 Graz (AT)**
- **HRIBERNIG, Gerd**
  **A-8046 Graz (AT)**
- **KLAMBAUER, Wilhelm**
  **A-8790 Eisenerz (AT)**
- **KORP, Michael**
  **A-8044 Graz (AT)**
- **MARIUS, Wolfgang**
  **A-8043 Graz (AT)**
- **RAUNEGGER, Arno**
  **A-8046 Graz (AT)**
- **UNGER, Erwin**
  **A-8042 Graz (AT)**

- **WINDISCH, Claudia**
  **A-8565 St. Johann (AT)**

(74) Vertreter: **Peham, Alois, Dipl.-Ing.**
**Postfach 22 13 17**
**80503 München (DE)**

(56) Entgegenhaltungen:
**US-A- 5 572 597**

- **MAIO D ET AL: "DIRECT GRAY-SCALE MINUTIAE DETECTION IN FINGERPRINTS" IEEE TRANSACTIONS ON PATTERN ANALYSIS AND MACHINE INTELLIGENCE, Bd. 19, Nr. 1, Januar 1997, Seiten 27-40, XP000682681**
- **ASAI K ET AL: "FINGERPRINT IDENTIFICATION SYSTEM" USA-JAPAN COMPUTER CONFERENCE PROCEEDINGS, TOKYO, AUGUST 26 - 28, 1975, Nr. CONF. 2, 26. August 1975, Seiten 30-35, XP002039013 AMERICAN FEDERATION OF INFORMATION PROCESSING SOCIETIES**
- **LEUNG W F ET AL: "Fingerprint recognition using neural network" NEURAL NETWORKS FOR SIGNAL PROCESSING. PROCEEDINGS OF THE 1991 IEEE WORKSHOP (CAT. NO.91TH0385-5), PRINCETON, NJ, USA, 30 SEPT.-1 OCT. 1991, Seiten 226-235, XP000619891 ISBN 0-7803-0118-8, 1991, New York, NY, USA, IEEE, USA**

## Beschreibung

Die Erfindung betrifft ein Verfahren zur Identifizierung von Fingerabdrücken.

Die maschinelle Identifizierung von Personen gewinnt zusehens an Bedeutung. Einsatzmöglichkeiten sind dabei unter anderem Zutrittskontrollen, Geldausgabeautomaten und Kommunikationsgerate aller Art.

Für die Identifikation geeignete personenbezogene Merkmale sind beispielsweise das Muster der Blutbahnen der Netzhaut, die Struktur der Iris, die Länge und Form der Finger, das Gesicht, die Stimme oder aber Fingerabdrucke. Die Möglichkeiten, Personen aufgrund dieser Merkmale zu identifizieren, sind beispielsweise in IEEE Spectrum, Februar 1994, " It had to be you" beschrieben. Die wahrscheinlich am besten erforschten und damit zuverlässigsten Merkmale sind dabei die Fingerabdrücke. Diese sind auch in für den Benutzer komfortabler Weise zu ermitteln, während z.B. das Muster der Netzhaut nur durch eine für den zu Identifizierenden unangenehme Prozedur erfaßt werden kann und daher nur in jenen Fällen angewendet werden wird, in denen dieser Effekt keine Rolle spielt oder ggf. sogar erwünscht ist.

Wie durch sorgfältige Reihenuntersuchungen und Statistiken nachgewiesen wurde, sind die Fingerabdrucke jedes einzelnen individuell geprägt. Selbst in Fällen von eineiigen Zwillingen sind die Fingerabdrücke nicht identisch, obwohl sie sich ahnlich sehen. Gebildet wird das Muster der Fingerabdrücke durch die sogenannten Papillarlinien oder Ridges. die durch Verzahnung zweier Hautschichten entstehen.

Dabei sind fur den Identifikationsvorgang vor allem die sogenannten Minutien, das sind Endpunkte, Verzweigungen, Inseln oder andere singuläre Stellen interessant. Der zu identifizierende Fingerabdruck wird daher daraufhin untersucht, welche Minutien er aufweist, die ermittelten Minutien werden einem Typus zugeordnet und ihre Lage zueinander wird bestimmt.

Die so erhaltenen Minutien beschreiben den Fingerabdruck vollständig. Sie dienen als Grundlage für den Vergleich des zu identifizierenden Fingerabdruckes mit gespeicherten Referenzmustern.

Der Erfindung liegt nun die Aufgabe zugrunde, ein Verfahren anzugeben, mit dem Selektion und Typisierung der Minutien, sowie der Vergleich mit gespeicherten Mustern automatisch durchgefuhrt werden kann.

Dies geschieht erfindungsgemäß mit einem Verfahren zur Identifizierung von Fingerabdrucken mit folgenden Verfahrensschritten:

- die Bildinformation über einen zu identifizierenden Fingerabdruck wird in ein Schwarzweißbild umgewandelt,
- aus dem Schwarzweißbild werden durch Ausdünnung Liniensegmente erzeugt,
- aus den Liniensegmenten werden wahrscheinliche Fingerlinien und die in diesen enthaltenen Minutien bestimmt,
- die Lage der Minutien wird mittels Momentenmethode normiert,
- die Minutien werden mittels neuronalem Netz hinsichtlich ihres Typs und ihrer Qualitat klassifiziert,
- die so erhaltene Information über den Fingerabdruck wird mit gespeicherten Referenzmustern verglichen und eine Aussage über die Übereinstimmung mit gespeicherten Mustern getroffen.

Das Verfahren zeichnet sich insbesondere durch die damit erzielbare hohe Erkennungssicherheit bei nur geringem Rechenaufwand aus.

Vorteilhafte Ausgestaltungen der Erfindung sind in den Unteransprüchen enthalten.

Die Erfindung wird anhand von Figuren näher erläutert. Es zeigen beispielhaft:

Fig.1 die schematische Darstellung eines binarisierten Bildes eines Fingerabdruckes,
Fig.2 die als Grundlage fur den iterativen Wachstumsprozeß dienende tabellarische Darstellung eines Bildausschnittes,
Fig.3 eine Darstellung zur Veranschaulichung der Filterung des Bildes,
Fig. 4 eine Darstellung zum anisotropen Wachstumsprozeß,
Fig.5 das mittels Sensor erhaltene Bild eines Fingerabdruckes,
Fig. 6 das Orientierungsfeld zum Bild nach Figur 5,
Fig. 7 das Bild nach Fig. 5 nach dem Verfahrensschritt der Equalisierung,

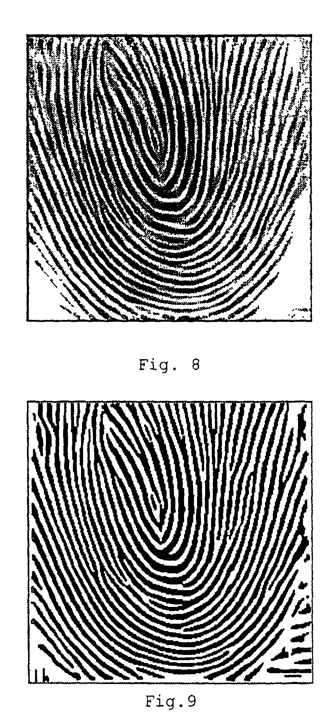

Fig. 8 das gefilterte Bild des Fingerabdruckes nach Fig.5,
Fig. 9 das vollstandig binarisierte Bild.

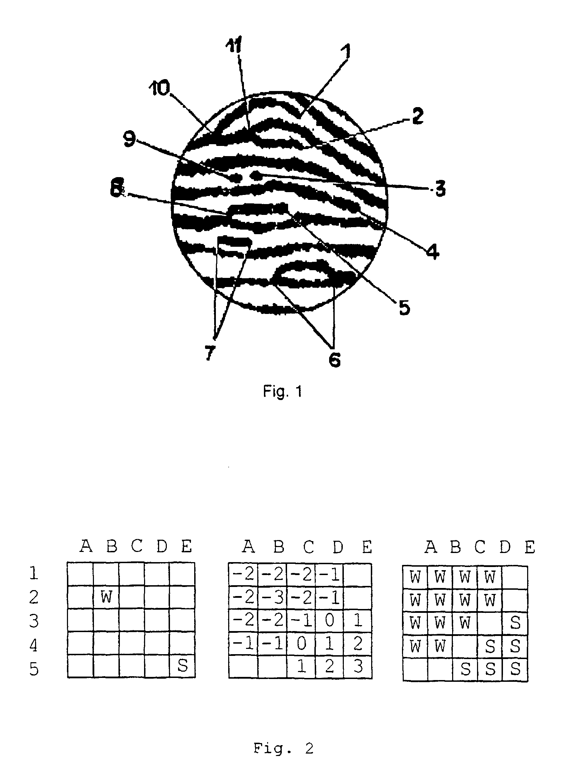

In der Darstellung nach Fig. 1 entsprechen die dunklen Linien den Fingerlinien oder Papillarlinien welche mit ihrem Verlauf den Fingerabdruck bestimmen.

Zur automatischen Klassifizierung eines Fingerabdruckes wird jedoch nicht das gesamte Muster herangezogen, da bei diesem durch Aufnahmetechnik, Aufnahmedruck und Alterung der betroffenen Person Verzerrungen auftreten können. Grundlage des Erkennungsvorganges sind vielmehr Art und Anzahl der in diesem Abdruck enthaltenen Minutien wie z.B. der Fingerlinienenden 1,2,4,5, der Punkte 3,9, der Inseln 6, der kurzen Linien 7 und der Gabeln 8, 10, 11.

Typus, Lage und Orientierung dieser Minutien sind hingegen gegenüber den genannten Verzerrungen relativ unempfindlich und eignen sich daher fur einen automatisierten Erkennungsvorgang.

Bei diesem wird nach dem beschriebenen Ausführungsbeispiel das digitalisierte, d.h. als Grauwertinformation zu einzelnen Bildpunkten vorliegende Bild des Fingerabdruckes in einem ersten Bearbeitungsschritt gefiltert, um so den Bildkontrast zu erhöhen, die Linien hervorzuheben und störendes Rauschen zu verringern. Die dafür eingesetzten Verfahren sind eine Histogrammequalisierung und eine Mittelwertbildung, die an jedem Punkt des Bildes die lokale Orientierung der Fingerlinien ausnutzt.

Durch die Histogrammequalisierung nach einem aus der Literatur bekannten Verfahren (Jain A.K., "Fundamentals of Digital Image Processing", Prentice Hall 1989, Englewood Cliffs, NJ 07632, ISBN 0-13-3361-65-9) werden Bildkontraste erhöht und damit unterschiedliche Eigenschaften der optischen Sensoren ausgeglichen..

Kurz zusammengefaßt, besteht dieses Verfahren darin, daß die Häufigkeitsverteilung der Grauwerte des Bildes in einem Histogramm erfaßt wird und aufgrund dieser Verteilung den Bildpunkten neue Grauwerte zugewiesen werden. Dabei werden die Helligkeitsunterschiede zwischen den am häufigsten auftretenden Grauwerten erhöht und die Helligkeitsunterschiede zwischen selten auftretenden Grauwerten verringert. Das Ergebnis dieser Verarbeitung bei dem Fingerabdruck nach Bild 5 ist aus Bild 7 ersichtlich.

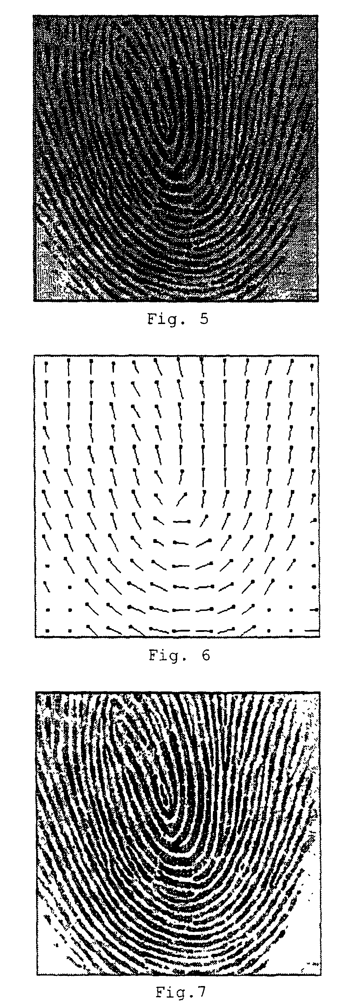

Ein weiterer Verarbeitungsschritt besteht in der Ermittlung eines, den Fingerabdruck beschreibenden Orientierungsfeldes, wie es in Fig. 6 dargestellt ist.

Dieses Orientierungsfeld wird nach einem in der Literatur bekannten Verfahren (G. H. Granlund. In search of a general picture processing operator., "Computer Graphics and Image Processing, 8:155-173, 1978.) erhalten. Es kann als vektorwertige Funktion in zwei Variablen interpretiert werden, bei der jedem Punkt des Fingerprints ein Vektor zugeordnet wird, der parallel zur Orientierung der lokalen Fingerlinien verläuft.

Zur eigentlichen Filterung des equalisierten Bildes auf der Grundlage des Orientierungsfeldes sind in der Literatur bereits verschiedene Ansatze vorgeschlagen worden. So besteht die Möglichkeit, die Periodizität der Ridges auszunutzen. Dieser Ansatz (A. Jain, H.Lin, B.Ruud, "On-Line Fingerprint Verification", IEEE Transactions on Pattern Analysis and Machine Intelligence, Vol.19, No 4. Apr.1997, pp. 302-314) verwendet Gabor-Filter mit endlicher Bandbreite, und der vorab berechneten Orientierung.

Rechentechnisch weniger aufwendig, aber dennoch sehr effektiv ist die erfindungsgemäße richtungsspezifische Mittelwertbildung. Diese weist in Bezug auf die Unterdruckung der Schweißporen und kurzen Ridgeunterbrechungen sowie die Kantenglättung der Ridges besonders günstige Eigenschaften auf. Die Kantenglattung der Ridges oder Papillarlinien ist besonders dann wichtig, wenn die Ridgezwischenräume sehr klein werden (in der Gegend von 2-3 Bildpunkte).

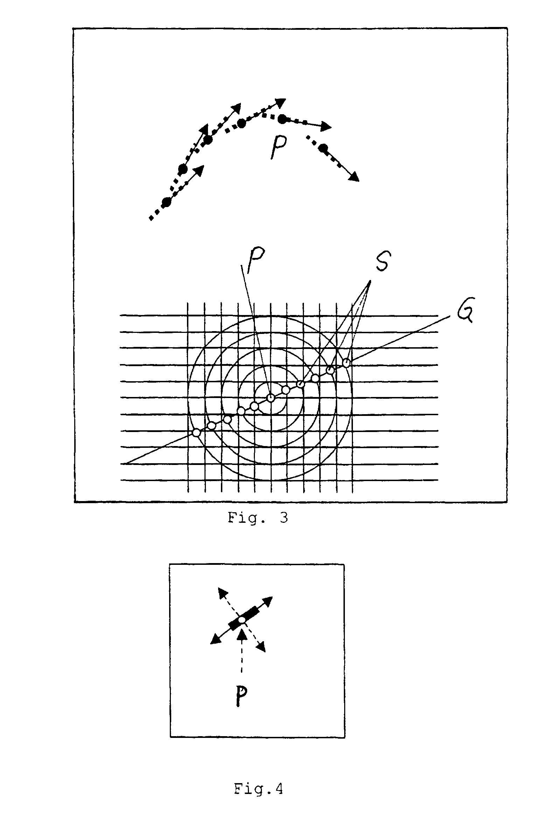

Die Mittelwertbildung wird anhand von Fig.3 naher erlautert. Durch den Punkt P, dessen gefilterter Grauwert ermittelt werden soll, wird eine Gerade G gelegt, deren Richtung der Vorzugsrichtung V des Orientierungsfeldes in diesem Punkt entspricht. Die zu dieser Geraden G nächstliegenden benachbarten Bildpunkte (z.B 10 Punkte) werden ermittelt und aus deren Grauwerten der Mittelwert berechnet, der den neuen gefilterten Grauwert des zu berechnenden Punktes P darstellt.

Die Ermittlung der nächstliegenden Punkte erfolgt in einfacher Weise dadurch, daß auf der Linie in äquidistanten Abständen Sollpunkte S definiert werden und die zu diesen Punkten nächstliegenden realen Bildpunkte festgelegt werden.

Bei Punkten P, in deren Nähe das Orientierungsfeld eine vergleichsweise große Krummung aufweist, kann es dabei auch zweckmaßig sein, die Gerade G durch eine Kurve zu ersetzen.

In einem weiteren Schritt wird das gefilterte Bild binarisiert, d.h. jedem Bildpunkt wird der Wert Schwarz oder weiß zugeordnet.

Bei herkommlichen Binarisierungsverfahren werden dazu entweder lokale oder ein globaler, d.h. für das gesamte Bild gültiger Grauwert-Schwellwert gebildet und in Abhängigkeit von diesem den einzelnen Bildpunkten die Farbe Weiß oder Schwarz zugeordnet. Diese bekannten Verfahren sind - bei Bildung eines lokalen Schwellwertes - äußerst rechenaufwendig, bzw. führt die Anwendung von globalen Schwellwerten erfahrungsgemäß zu Bildverfalschungen, welche die Erkennungsrate verschlechtern.

Demgegenüber werden nach der vorliegenden Erfindung signifikante Bildpunkte binarisiert und danach mittels iterativem Wachstumsprozeß die Werte der ubrigen Bildpunkte festgelegt.

Die Binarisierung der signifikanten Bildpunkte erfolgt dabei in der Weise, daß das Bild in Bereiche unterteilt wird, wobei sich Bildgrößen von 512 X 512 Punkte und Bereichsgrößen von 3 X 3 oder 4 X Punkte als vorteilhaft herausgestellt haben. Dazu wird zu jedem Bereich eine Bereichsumgebung festgelegt. Fur jeden Bereich und die dazu definierte Umgebung werden darauf die jeweils hellsten und dunkelsten (Kleinster Grauwert und großter Grauwert) Bildpunkte ermittelt und miteinander verglichen.

Wenn nun der hellste Punkt eines Bereiches einen Grauwert aufweist, der innerhalb eines vorgegebenen Toleranzbereiches um den Grauwert des hellsten Punktes der zugehörigen Umgebung liegt, dann wird diesem Punkt des Bereiches die Farbe Weiß zugeordnet. Liegt der Grauwert außerhalb des Toleranzfensters, dann erfolgt keine Zuordnung. Auf dieselbe Weise wird der jeweils dunkelste Punkt eines Bereiches mit dem dunkelsten Punkt der Umgebung verglichen, ggfs. wird ihm die Farbe Schwarz zugewiesen.

Wenn die Grauwerte der beiden Extremwerte eines Bereiches innerhalb des Toleranzfensters eines Extremwertes z.b. des hellsten Wertes der Umgebung liegen, wird ihnen dieselbe Farbe, in diesem Beispiel Weiß zugewiesen. In dem Fall, daß ein Bereich und seine Umgebung nur sehr geringe Grauwertunterschiede aufweisen, erfolgt keine Zuweisung von Weiß oder Schwarz.

Nach diesem Verfahren sind typisch weniger als 25% der Bildpunkte hinsichtlich ihrer Farbe festgelegt.

Die Farbe der restlichen Bildpunkte wird ausgehend von den obgenannten Punkten mit Hilfe eines iterativen Wachstumsprozesses ermittelt der anhand von Fig. 2 näher erläutert wird.

Die Fig. 2 zeigt einen Bildausschnitt mit 25 Bildpunkten, von denen 2 bezüglich ihrer Farbe festgelegt sind. Es sind dies die Punkte mit den Koordinaten B2 und E5.

Diese Punkte und ihre Umgebung werden nun entsprechend ihrer Farbe mit Werten versehen. Bildpunkt B2 hat die Farbe Weiß, er erhält als Wert -3, die ihn direkt umgebenden Bildpunkte erhalten den Wert -2, die weitere Umgebung den Wert -1. Der schwarze Bildpunkt E5 und seine Umgebung erhalten entsprechende positive Werte. Bei Bildpunkten, die zur Umgebung sowohl des weißen Punktes B2 wie auch des schwarzen Punktes E5 gehören, werden die vergebenen Werte summiert. So ergibt sich z.B. für den Bildpunkt C3 -2 + 1 = -1. Danach wird jedem Bildpunkt S mit einem positven Wert die Farbe Schwarz und allen Bildpunkten mit einem negativen Wert die Farbe Weiß zugeordnet.

Ausgehend von diesen Punkten werden nun nach dem beschriebenen Verfahren in einem iterativen Prozeß zu den verbliebenen noch nicht zugeordneten Bildpunkten Farben festgelegt. Die Zahl der Iterationsschritte ist ein freier Parameter des Verfahrens. Erfahrungsgemäß führen jedoch 1-3 Schritte zu einem Bild mit der gewünschten Glättung und einem vertretbaren Anteil von verbleibenden, hinsichtlich ihrer Farbe unbestimmten Punkten.

Bei einem alternativen Binarisierungsverfahren wird unter Nutzung der Information des Orientierungsfeldes die Farbe einzelner Bildpunkte dadurch festgelegt, daß senkrecht zur Richtung der lokalen Ausrichtung der Fingerlinien ein Helligkeits-Mittelwert gebildet wird und in Abhangigkeit vom Verhältnis dieses Helligkeits-Mittelwertes zum Grauwert des Bildpunktes, dieser als Weiß, Schwarz oder unbestimmt klassifiziert wird. Dabei wird um den Mittelwert ein Toleranzfenster definiert. Liegt der Grauwert innerhalb dieses Toleranzfensters, dann erfolgt keine Farbzuweisung, liegt der Grauwert außerhalb des Toleranzfensters dann wird der Punkt mit Weiß oder Schwarz bestimmt.

Die solcherart festgelegten Punkte dienen als Grundlage eines zellulären Wachstumsprozesses, der allerdings im Gegensatz zu dem bereits beschriebenen Wachstumsprözeß anisotrop ausgestaltet ist. Dies bedeutet, daß ein Farbpunkt P in die mittels Orientierungsfeld bestimmte Vorzugsrichtung stärker ausstrahlt, als in die Querrichtung. Schematisch ist dies in Fig. 4 dargestellt.

Die anhand der Fig. 2 beschriebene Berechnungsmethode wird dazu insofern abgeändert, als die in Vorzugsrichtung liegende Umgebung eines hinsichtlich seiner Farbe bereits festgelegten Punktes mit höheren Werten beaufschlagt wird, als die Umgebung quer zur Vorzugsrichtung. Mit dem anisotropen Wachstumsprozeß erfolgt eine weitere Unterdrückung von Schweißporen und Abbildungsfehlern.

Aus dem schließlich erhaltenen Binärbild werden durch Ausdunnung - Linienextraktion - nach einem aus der Literatur bekannten Verfahren (z.B. R.W.Zhou et.al Patt.Rec.Lett. 16(1995)1267-1275) Liniensegmente generiert, die sich durch für die weitere Bearbeitung optimale Eigenschaften auszeichnen. Binarisierung und Linienextraktion werden sowohl für die positiven wie auch für die invertierten Bilddaten vorgenommen, da durch die Untersuchung der invertierten Bilddaten die in den Fingerlinienzwischenräumen enthaltene, unabhängige Information für die Liniensynthese genutzt werden kann.

Das Ergebnis der Linienextraktion sind zwei Sätze von Liniendaten, wovon der eine die Fingerlinien und der andere die Fingerlinienzwischenräume beschreibt. Aufgrund von Bildaufnahmetechnik, Störungen und Besonderheiten der Binarisierung enthalten diese Liniendaten plausible und artifizielle d.h. durch die obgenannten Verfahrensschritte entstandene Liniensegmente, die unterschieden und zu Fingerlinien synthetisiert werden mussen.

Bei der Bestimmung der wahrscheinlichen Fingerlinien aus den Liniensegmenten werden folgende Regeln angewendet:

- lange Fingerlinien sind vertrauenswurdiger als kurze,
- die Vertrauenswurdigkeit einer Fingerlinie wird durch die Anwesenheit paralleler Fingerlinien in einem typischen Abstand oder durch die Anwesenheit von Fingerlinientälern mit halbem Abstand vergrößert,
- kurze Fingerlinien, die rechtwinkelig zu langen Fingerlinien stehen, verlieren an Glaubwürdigkeit,
- Fingerlinien, deren Enden aufeinander zielen, werden miteinander verbunden.

Ergebnis dieser Bestimmung ist eine Liste von Merkmalen (Minutien) und zu jedem Merkmal die Angabe von Typ, Lage, Linienbreite, Orientierung und Qualitätsmaß, welches aus der Anzahl der bei der Bestimmung angewendeten Regeln ermittelt wird.

Dieses Ergebnis wird nach der vorliegenden Erfindung wird es jedoch mittels neuronalem Netz überprüft und ggf. korrigiert, d.h. die vermuteten Minutien werden durch das neuronale Netz bestätigt oder verworfen und damit die Erkennungssicherheit erhöht.

Dazu wird zu jedem vermuteten Merkmal (Minutie) ein entsprechender Bildausschnitt neuerlich binarisiert, wobei ein herkömmliches Binarisierungsverfahren mit Schwellwert angewendet wird. Dabei wird der Bildausschnitt in einen inneren und einen äußeren Teilausschnitt unterteilt. Für jeden der Teilausschnitte und den gesamten Bildausschnitt wird ein Grauwertdurchschnitt berechnet. Der Schwellwert wird dann in Abhängigkeit vom Verhältnis der Grauwertdurchschnittswerte zueinander festgelegt. Grauwerten, die über dem Schwellwert liegen, wird die Farbe Schwarz zugeordnet, die übrigen Punkte werden als Weiß beurteilt.

Das so erhaltene Binärbild wird als zweidimensionale Dichteverteilfunktion f(x,y) betrachtet. Zur Normierung, d.h. zur Drehung in eine vorgegebene Lage werden mittels Momentenmethode aus dem Bildinhalt gemäß

$$m_{pq} = \sum_{i=1}^{n} \sum_{j=1}^{m} i^p j^q f(i,j)$$

Momente erster und zweiter Ordnung ermittelt mit

*n,m* ... als Anzahl der Bildpunkte über die Breite und Höhe des Bildes,
*i,j* ....als Koordinaten eines Bildpunktes, und
*f(i,j)* ... als Dichteverteilungsfunktion,

weiterhin werden die X,Y-Koordinaten eines Referenzpunktes

$$x = m_{10} / m_{00}$$

$$y = m_{01} / m_{00}$$

bestimmt und mit Hilfe des Referenzpunktes zentrale Momente (μ) gemäß,

$$\mu_{11} = m_{11} - y^* m_{01}$$

$$\mu_{20} = m_{20} - x^* m_{10}$$

$$\mu_{02} = m_{02} - y^* m_{01}$$

berechnet und daraus ein Winkel σ nach

$$\sigma = 0.5 * \arctan^{\frac{2^*\mu_{11}}{\mu_{20}-\mu_{02}}}$$

ermittelt, um den das Objekt in die Normallage gedreht wird

Um eine schnelle Berechnung der zweidimensionalen Momente zu ermöglichen werden diese nach der sogenannten Deltamethode von M.F. Zakaria ermittelt. Bei dieser Methode werden Segmente gleichartiger Pixelfolgen pro Zeile in der Berechnung als Einheit betrachtet. Für die Berechnung der Lage des Bildes wird dann nur das größte Segment herangezogen.

Nachdem solcherart die Lage des Merkmales bestimmt ist, wird der Bildausschnitt so gedreht, daß sich das enthaltene Merkmal in einer zur Hauptmomentenachse definierten Lage befindet.

Danach wird der Bildausschnitt mittels neuronalem Netz klassifiziert. Dazu wird der Wert der einzelnen Bildpunkte - typisch etwa 176 -, an die Eingange eines "Feedforward Neural Network" ("Parallel Distibuted Processing", D. Rumelhart u.a., MIT Press 1986) angelegt, wobei fur die formale Beschreibung die Bildpunkte zu einem Eingangsvektor I zusammengefaßt werden. Daraus wird mittels neuronalem Netz ein Ausgangsvektor O über eine Zwischenschicht errechnet, wobei der Ausgangsvektor 5 im Ausführungsbeispiel 5 Elemente umfaßt, welche die 5 Grundtypen der Merkmale eines Fingerabdruckes umfaßen. Es sind dies: "weiße Gabel rechts, weiße Gabel links, Ridge (Linie, schwarze Gabel rechts,schwarze Gabel links".

"Weiße Gabel rechts bzw. links" beschreiben eine Gabelung der Fingerlinienzwischenräume mit Grobangabe der Orientierung. "Schwarze Gabel rechts bzw. links" entsprechen einer Gabelung der Fingerlinie.

Ridge (Linie) beschreibt kein Merkmal, sondern führt aufgrund der damit erhöhten Unterscheidungsmöglichkeiten zwischen einfachen (uninteressanten) Linien und Minutien zu einer erhohten Erkennungsqualität des Netzes.

Die Topologie desselben, d.h. die Anzahl der Neuronen ergibt sich eingangsseitig durch die Anzahl i der Pixel des Musters (z.B. 176), ausgangs-seitig durch die Zahl der unterschiedenen Merkmalstypen (k=5) und für die Zwischenschicht j gilt:

$$j = \frac{i+k}{2}$$

Bevor dieses Neuronale Netz zur Klassifikation eingesetzt werden kann, muß es trainiert werden. Dazu wird der "Errorbackpropagation-Algorithmus" ("Parallel Distibuted Processing", D. Rumelhart u.a., MIT Press 1986) verwendet.

Dabei werden Muster mit vorgegebener Klassifizierung dem Neuronalen Netz vorgelegt, welches iterativ den Zusammenhang zwischen Muster und Klassifizierung lernt.

Das so trainierte Neuronale Netz bildet zu jedem angelegten Bildausschnitt einen Ausgangsvektor der die Werte der 5 Ausgangsneuronen umfaßt. Das Verhältnis dieser Werte definiert den Typ und die Qualität des vorgelegten Musters.

Wenn dabei der Wert eines Ausgangsneurons sehr hoch im Vergleich zu den anderen Werten ist, dann liegt ein Ergebnis mit sehr hoher Qualität vor, das entsprechende Merkmal wurde also eindeutig dem Grundtyp zugeordnet, der durch dieses Ausgangsneuron bestimmt ist. Wenn allerdings alle Ausgangsneuronen in etwa den selben Wert aufweisen, dann konnte das neuronale Netz das angelegte Bild keinem Merkmalstyp zu-

9      **EP 0 981 802 B1**      10

ordnen.

Das Ergebnis des Erkennungsvorganges ist weitgehend unabhängig von der Position des Merkmales im betrachteten Bildausschnitt. Diese an sich vorteilhafte Eigenschaft des neuronalen Netzes führt allerdings dazu, daß die Position eines Merkmales nicht ohne weiteres bestimmt werden kann, da das neuronale Netz bei sich überlappenden Bildausschnitten, die zwar dasselbe Merkmal aber an unterschiedlichen Stellen enthalten, zu einem nahezu gleichen Ergebnis kommt.

Zur Ermittlung der exakten Position eines Merkmales werden daher die Ergebnisse zur Beurteilung sich überlappender Bildausschnitte miteinander verglichen und als Ort des Merkmales das Zentrum des Bildausschnittes gewählt, bei dessen Beurteilung das neuronales Netz ein Maximum ergibt.

Die Ermittlung dieses Maximums kann beispielsweise dadurch erfolgen, daß um den betrachteten Bildausschnitt die Ergebnisse des neuronalen Netzes zu umgebenden, überlappenden Bildausschnitten gezählt werden. Ist die Summe der Ergebnisse der Umgebung ein Maximum im Vergleich zu den Summen der Umgebung der Nachbarbildausschnitte, so wird das Zentrum dieses Bildausschnittes als eindeutige Position des Merkmals festgelegt.

Alternativ dazu kann auch die Qualitat der Ergebnisse benachbarter, sich überlappender Bildauschnitte zur Ermittlung der exakten Position von Merkmalen herangezogen werden.

Diese Qualitatsergebnisse werden als Skalarfeld betrachtet und ein globales Maximum bestimmt. Der Ort des Maximums wird als Position des Merkmals festgehalten.

Die Ergebnisse des neuronalen Netzes, das sind die bestätigten Minutien werden mit Merkmalslisten bekannter Fingerabdrucke, den sogenannten Kandidaten verglichen.

Dazu wird zu jeder Minutie des zu identifizierenden Fingerabdruckes festgestellt, ob sich gleichartige Minutien des Kandidaten in einem vorgegebenen räumlichen Toleranzbereich befinden. Sind derartige Minutien vorhanden, dann wird ein Abstandsvektor zwischen der Minutie des zu identifizierenden Fingerabdruckes und der Kandidatenminutie gebildet.

Die Gesamtheit dieser Verbindungsvektoren und ihr Verhältnis zur Zahl der vorhandenen Minutien beschreibt die Ähnlichkeit der beiden Fingerabdrücke.

So gelten beispielsweise zwei Fingerabdrücke als ahnlich bzw. als mit hoher Wahrscheinlichkeit übereinstimmend, wenn für zumindest 75% der Minutien Verbindungsvektoren existieren und wenn dieselben zu mindestens 80% innerhalb gewisser Toleranzen dieselbe Lange und dieselbe Orientierung aufweisen.

Sind hingegen nur fur einen geringen Teil der Minutien Verbindungsvektoren ermittelt worden, weil innerhalb der jeweils vorgegebenen Toleranzbereiche keine gleichartigen Minutien des Kandidaten gefunden wurden, dann liegt keine Übereinstimmung vor. Diese Nichtübereinstimmung ist auch dann gegeben, wenn zwar Verbindungsvektoren gefunden werden, diese aber in ihrer Mehrzahl unterschiedliche Längen oder Orientierungen aufweisen.

Je nach Anwendungsfall wird eine Liste der am besten übereinstimmenden Kandidaten (beispielsweise im kriminaltechnischen Bereich) oder aber - wenn vorhanden-eine einzelne Übereinstimmung (z.B. bei Zutrittskontrollsystemen) ausgegeben. Als übereinstimmender Fingerabdruck wird dann der Kandidat festgelegt, der das beste Verhältnis von gleichartigen Vektoren zu Minutien aufweist. Dies allerdings nur dann, wenn sich dieser Kandidat in seinem Ergebnis deutlich von den weiteren Kandidaten unterscheidet.

## Patentansprüche

**1.** Verfahren zur Identifizierung von Fingerabdrucken mit folgenden Verfahrensschritten:

- die Bildinformation über einen zu identifizierenden Fingerabdruck wird durch Anwendung eines zellulären Wachstumsprozesses auf ausgewählte Merkmale des Bildes in ein Schwarzweißbild umgewandelt,
- aus dem Schwarzweißbild werden durch Ausdunnung Liniensegmente erzeugt,
- aus den Liniensegmenten werden wahrscheinliche Fingerlinien und die in diesen enthaltenen Minutien bestimmt,
- die Lage der Minutien wird mittels Momentenmethode normiert,
- die Minutien werden mittels neuronalem Netz hinsichtlich ihres Typs und ihrer Qualität klassifiziert,
- die so erhaltene Information über den Fingerabdruck wird mit gespeicherten Referenzmustern verglichen und eine Aussage uber die Übereinstimmung mit gespeicherten Mustern getroffen.

**2.** Verfahren nach Anspruch 1, dadurch gekennzeichnet, daß bei der Umwandlung der Bildinformation über einen zu identifizierenden Fingerabdruck in ein Schwarzweißbild

- das gefilterte Bild in vergleichbar große Bereiche aufgeteilt wird und zu jedem Bereich eine Umgebung festgelegt wird,
- daß für jeden Bereich und die dazu bestimmte Umgebung jeweils die Bildpunkte mit dem großten und dem kleinsten Grauwert ermittelt werden,
- daß dann, wenn diese extremen Grauwerte eines Bereiches annähernd mit den extremen Grauwerten der Umgebung übereinstimmen,

**6**

dieselben als weißer oder schwarzer Bildpunkt festgelegt werden

- daß ausgehend von den solcherart ermittelten weißen und schwarzen Bildpunkten die weiteren weißen und schwarzen Bildpunkte mittels zellularem Wachstumsverfahren in einem iterativen Prozeß ermittelt werden.

3. Verfahren nach Anspruch 1 oder 2, **dadurch gekennzeichnet,** daß vor Anwendung eines zellulären Wachstumsprozesses die Bildinformation durch richtungsspezifische Mittelwertbildung auf der Basis der über ein Orientierungsfeld ermittelten lokalen Ausrichtung der Fingerlinien gefiltert wird.

4. Verfahren nach Anspruch 3, **dadurch gekennzeichnet,** daß das zelluläre Wachstumsverfahren anisotrop ausgestaltet ist und daß die uber ein Orientierungsfeld ermittelte lokale Ausrichtung der Fingerlinien zur Bestimmung einer bevorzugten Wachstumsrichtung eines Punktes herangezogen wird.

5. Verfahren nach Anspruch 3, **dadurch gekennzeichnet,** daß als Grundlage für das zelluläre Wachstumsverfahren die Farbe einzelner Bildpunkte in der Weise festgelegt wird,

- daß in Richtung der lokalen Ausrichtung der Fingerlinien ein Helligkeits-Mittelwert gebildet wird,
- daß in Abhängigkeit vom Verhältnis des Helligkeits-Mittelwertes zum Grauwert des Bildpunktes, dieser als Weiß, Schwarz oder unbestimmt klassifiziert wird.

6. Verfahren nach einem der Ansprüche 1 bis 5, **dadurch gekennzeichnet**, daß zur Normierung der Lage der vermuteten Minutien mittels Momentenmethode ein diese umfassender kreisförmiger Bildausschnitt des Ursprungsbildes in ein Schwarzweißbild umgewandelt wird und zu dem Bildinhalt gemäß

$$m_{pq} = \sum_{i=1}^{n} \sum_{j=1}^{m} i^{p} j^{q} f(i,j)$$

Momente erster und zweiter Ordnung ermittelt werden mit

**n,m** ... als Anzahl der Bildpunkte über die Breite und Höhe des Bildes,
**i,j** ....als Koordinaten eines Bildpunktes, und
**f(i,j)** ...als Dichteverteilungsfunktion,

daß weiterhin die X,Y-Koordinaten eines Referenzpunktes

$$x = m_{10} / m_{00}$$

$$y = m_{01} / m_{00}$$

bestimmt werden und mit Hilfe des Referenzpunktes zentrale Momente ($\mu$) gemäß,

$$\mu_{11} = m_{11} - y^* m_{01}$$

$$\mu_{20} = m_{20} - x^* m_{10}$$

$$\mu_{02} = m_{02} - y^* m_{01}$$

berechnet werden und daraus ein Winkel $\sigma$ nach

$$\sigma = 0.5 * \arctan \frac{2^* \mu_{11}}{\mu_{20} - \mu_{02}}$$

ermittelt wird, um den das Objekt in die Normallage gedreht wird.

7. Verfahren nach einem der Ansprüche 1 bis 6, **dadurch gekennzeichnet,** daß bei der Bestimmung der wahrscheinlichen Fingerlinien aus den Liniensegmenten folgende Regeln angewendet werden:

- lange Fingerlinien sind vertrauenswürdiger als kurze,
- die Vertrauenswurdigkeit einer Fingerlinie wird durch die Anwesenheit paralleler Fingerlinien in einem typischen Abstand oder durch die Anwesenheit von Fingerlinientälern mit halbem Abstand vergrößert,
- kurze Fingerlinien, die rechtwinkelig zu langen Fingerlinien stehen, verlieren an Glaubwurdigkeit,
- Fingerlinien, deren Enden aufeinander zielen, werden miteinander verbunden.

8. Verfahren nach einem der Ansprüche 1 bis 7, **dadurch gekennzeichnet**, daß zur Klassifizierung der Minutien ein "Feedforward Neural Network" verwendet wird und daß neben der Ausgangsinformation des Netzes zur obgenannten Klassifizierung hinsichtlich ihres Typs und ihrer Qualität auch Information über den Erregungszustand von inneren Netzknoten berücksichtigt wird.

## Claims

1. Method for identifying fingerprints, having the following method steps:

   - the image information relating to a finger print to be identified is converted into a black and white image by applying a cellular growth process to selected features of the image,
   - line segments are generated from the black and white image by thinning out,
   - the line segments are used to determine probable finger lines and the minutia contained in the latter,
   - the position of the minutia is normalized by means of a moment method,
   - the minutia are classified by means of a neural network with regard to their type and their quality, and
   - the information thus obtained relating to the fingerprint is compared with stored reference patterns, and a statement is made on the correspondence to stored patterns.

2. Method according to Claim 1, characterized in that for the purpose of converting the image information relating to a fingerprint to be identified into a black and white image

   - the filtered image is divided into regions of comparable size, and an environment is defined for each region,
   - in that for each region and the environment determined therefor, the pixels with the largest and the smallest grey-scale value are respectively determined,
   - in that when these extreme grey-scale values of a region correspond approximately to the extreme grey-scale values of the environment, the latter is defined as a white or black pixel,
   - in that, starting from the white and black pixels determined in such a way, the further white and black pixels are determined by means of a cellular growth process in an iterative process.

3. Method according to Claim 1 or 2, characterized in that before the application of a cellular growth process, the image information is filtered by directionally specific averaging on the basis of the local alignment of the finger lines as determined via an orientation field.

4. Method according to Claim 3, characterized in that the cellular growth process is of an isotropic design, and in that the local alignment of the finger lines as determined via an orientation field is used to determine a preferred growth direction of a point.

5. Method according to Claim 3, characterized in that as a basis for the cellular growth process, the colour of individual pixels is determined in such a way

   - that a brightness average value is formed in the direction of the local alignment of the finger lines,
   - that the pixel is classified as white, black or undetermined as a function of the ratio of the brightness average value to the grey-scale value of the pixel.

6. Method according to one of Claims 1 to 5, characterized in that for the purpose of normalizing the position of the assumed minutia, a moment method is used to convert into a black and white image an image segment of the original image which surrounds these minutia and moments of first and second order are determined relative to the image content in accordance with

$$m_{pq} = \sum_{i=1}^{n} \sum_{j=1}^{m} i^p j^q f(i, j)$$

where

   $n, m$... is the number of pixels over the width and height of the image,
   $i, j$... are the coordinates of the pixel, and
   $f(i,j)$... is a density distribution function,

in that furthermore the X,Y-coordinates of a reference point

$$x = m_{10}/m_{00}$$

$$y = m_{01}/m_{00}$$

are determined and the reference point is used to calculate central moments ($\mu$) in accordance with

$$\mu_{11} = m_{11} - y^* m_{01}$$

$$\mu_{20} = m_{20} - x^* m_{10}$$

$$\mu_{02} = m_{02} - y^* m_{01}$$

and an angle $\sigma$ is determined therefrom using

$$\sigma = 0.5 * \arctan \frac{2* 11}{20 - 02}$$

about which the object is rotated into the normal position.

7. Method according to one of Claims 1 to 6, characterized in that the following rules are applied in determining the probable finger lines from the line segments:

- long finger lines are more trustworthy than short ones,
- the trustworthiness of a finger line is increased by the presence of parallel finger lines in a typical spacing, or by the presence of finger line valleys with half spacing,
- short finger lines which are at right angles to long finger lines lose out on reliability, and
- finger lines whose ends point to one another are interconnected.

8. Method according to one of Claims 1 to 7, characterized in that a feedforward neural network is used to classify the minutia, and in that in addition to the initial information of the network relating to the above named classification with regard to its type and its quality, account is also taken of information relating to the energized state of internal network nodes.

**Revendications**

1. Procédé d'identification d'empreintes digitales comportant les étapes opératoires suivantes:

- l'information d'image concernant une empreinte digitale à identifier est convertie en une image en noir et blanc en appliquant un procédé de croissance cellulaire à des caractéristiques sélectionnées de l'image,
- des segments de ligne sont produits à partir de l'image en noir et blanc par éclaircissement,
- à partir des segments de ligne, des lignes digitales probables et qui y sont contenues sont déterminées,
- la position des points particuliers est normée au moyen de la méthode des moments,
- les points particuliers sont classés du point de vue de leur type et de leur qualité au moyen d'un réseau neuronal,
- l'information ainsi obtenue sur l'empreinte digitale est comparée à des modèles de référence mémorisés et il est décidé de la coïncidence avec des modèles mémorisés.

2. Procédé suivant la revendication 1, caractérisé en ce que, lors de la conversion en une image en noir et blanc de l'information d'image concernant une empreinte digitale à identifier,

- l'image filtrée est subdivisée en zones de dimension comparable et un environnement est fixé à chaque zone,
- en ce qu'il est déterminé pour chaque zone et l'environnement qui lui est fixé chaque fois les points d'image ayant la plus grande et la plus petite valeur de gris,
- en ce que ensuite, si ces valeurs de gris extrêmes d'une zone coïncident à-peu-près avec les valeurs de gris extrêmes de l'environnement, elles sont fixées comme point d'image blanc ou noir,
- en ce que, à partir de points d'image blancs et noirs ainsi déterminés, les autres points d'image blancs et noirs sont déterminés au moyen d'un procédé de croissance cellulaire dans un processus itératif.

3. Procédé suivant la revendication 1 ou 2, caractérisé en ce que, avant d'appliquer un procédé de croissance cellulaire, l'information d'image est filtrée par formation de valeurs moyennes spécifiques à la direction sur la base de l'orientation locale des lignes digitales déterminées sur un champ d'orientation.

4. Procédé suivant la revendication 3, caractérisé en ce que le procédé de croissance cellulaire est réalisé de manière anisotrope et en ce que l'orientation locale des lignes digitales déterminées sur un champ d'orientation est utilisée pour déterminer une direction de croissance préférée d'un point.

5. Procédé suivant la revendication 3, caractérisé en ce qu'on fixe comme base pour le procédé de croissance cellulaire la couleur de points d'image individuels de telle manière,

- qu'une valeur moyenne de clarté est formée dans la direction de l'orientation locale des lignes digitales,
- que, en fonction du rapport de la valeur moyenne de clarté à la valeur de grille du point d'image, ce dernier est classé comme blanc, noir ou indéterminé.

6. Procédé suivant l'une des revendications 1 à 5, caractérisé en ce que, pour normer la position des points particuliers supposés au moyen de la méthode des moments, une partie circulaire de points, comprenant les points particuliers supposés, de l'image initiale est convertie en une image en noir et blanc et en ce que des moments du premier et du second ordre sont déterminés par rapport au contenu de l'image suivant

$$m_{pq} = \sum_{i=1}^{n}\sum_{j=1}^{m} i^{p} j^{q} f(i,j)$$

avec n, m ... comme nombre des points d'image sur la largeur et la hauteur de l'image,

i, j ... comme coordonnés d'un point d'image, et f(i,j) ... comme fonction de répartition de densité,

en ce que de plus les coordonnés X, Y d'un point de référence

$$x = m_{10} / m_{00}$$

$$y = m_{01} / m_{00}$$

sont déterminés et en ce que des moments ($\mu$) centraux sont calculés à l'aide du point de référence suivant

$$\mu_{11} = m_{11} - y^{*}m_{01}$$

$$\mu_{20} = m_{20} - x^{*}m_{10}$$

$$\mu_{02} = m_{02} - y^{*}m_{01}$$

et en ce que l'on détermine à partir de cela un angle $\sigma$ suivant

$$\sigma = 0.5 * \arctan^{\frac{2^{*}\mu_{11}}{\mu_{20}-\mu_{02}}}$$

afin de tourner l'objet en la position normale.

7. Procédé suivant l'une des revendications 1 à 6, caractérisé en ce que lors de la détermination des lignes digitales probables à partir des segments de lignes, on applique les règles suivantes :

- des lignes digitales longues sont plus dignes de confiance que des lignes digitales courtes,
- la fiabilité d'une ligne digitale est augmentée par la présence de lignes digitales parallèles à une distance typique ou par la présence de creux entre des lignes digitales à la moitié de la distance,
- des lignes digitales courtes, qui sont à angle droit avec des lignes digitales longues, perdent en crédibilité,
- des lignes digitales, dont les extrémités tendent les unes vers les autres, sont reliées les unes aux autres.

8. Procédé suivant l'une des revendications 1 à 7, caractérisé en ce que, pour classer les points particuliers, on utilise un « Feedforward Neural Network » et en ce que l'on tient compte, outre de l'information du départ du réseau pour le classement susmentionné du point de vue de leur type et de leur qualité, aussi de l'information sur l'état d'excitation de noeuds internes du réseau.

Fig. 1

Fig. 2

Fig. 3

Fig.4

Fig. 5

Fig. 6

Fig.7

Fig. 8

Fig.9